# EUROPEAN PATENT SPECIFICATION

(11) **EP 3 086 996 B1**
(45) Date of publication and mention of the grant of the patent: **03.10.2018**
(21) Application number: 14816449.4
(22) Date of filing: 11.11.2014
(51) Int. Cl.: B62D 49/08

(54) **A CAPACITY INCREASE FOR A BAG WEIGHT SUPPORT MECHANISM**
ERHÖHUNG DER KAPAZITÄT FÜR EINEN TASCHENGEWICHTSSTÜTZMECHANISMUS
ACCROISSEMENT DE CAPACITÉ D'UN MÉCANISME DE SUPPORT DE POIDS DE SAC

(30) Priority: 25.12.2013 TR 201315256
(43) Date of publication of application: 02.11.2016
(73) Proprietor: Turk Traktor Ve Ziraat Makineleri Anonim Sirketi, 06560 Ankara (TR)
(72) Inventor: NIZAMOGLU, Kubra, 06560 Ankara (TR)
(74) Representative: Inal, Aysegul Seda
(86) International application number: PCT/TR2014/000426
(87) International publication number: WO 2015/099623

(56) References cited:
- CN-U- 202 046 382
- JP-A- H11 208 534
- JP-U- S5 413 109
- US-A- 4 462 611
- US-A1- 2012 138 756

## Description

### Technical Field

The invention is related to a bag weight support mechanism placed on the weight support, improved in order to prevent the offsetting of the centre of gravity to prevent the possible dangers that could occur when there are loads behind tractors, which is a frequent application carried out especially in the agricultural sector.

### State of the known Art (Prior Art)

When tractors are carrying loads, it should be ensured that the center of gravity does not shift and the tractors should not lose balance. Due to this, the balancing of the tractor using the bag weight mechanism subject to the invention is a significant problem for tractor producers and the improvement of said mechanism has been a subject of study for many past years.

Nowadays when loads are being carried with tractors, the center of gravity may slip to the rear section. In order to eliminate this problem, bag type weight elements are used for safety in order to provide balance. However the weight mechanisms used at the moment, are not practical to be used by the user and they are expensive in terms of production. In order to solve problem that has risen, it is known that various studies are being carried out in relation to a bag support mechanism, in order to ensure a more practical bag support mechanism is produced with lower costs.

In the inventions subject to the documents with the publication numbers, CN 202046382 U, GB 13797630 A and JP 2011189801 A known in the state of the art, the technical details of bag type weights that are attached to the support panel which are one piece are being described. In said inventions, the support panel which is one piece, is fixed onto the front components of the tractor. The support panel has a spaced structure. The bag type weights are placed into the spaces on the support and each of the weights that are attached are fixed with several screws onto the support. In such a case, said support mechanisms are not practical enough to be used in modern tractors. Moreover, as the method is difficult to be applied due to increasing and decreasing standard weights, it is not practical and in addition to said conditions, the production costs are high; thus said mechanism is disadvantageous and is not preferred. The document JPH11208534 discloses a further weight support mechanism for agricultural vehicles,- and is considered to be the closest prior art. An invention titled a bag weight support mechanism whose capacity can be increased is described in detail below and it is not formed of a single piece on a tractor but is formed of multi pieces. Multi pieced supports necessitate the usage of only one screw, thus providing practical usage. By this means, the standard weights can be increased or decreased when desired and this provides easier usage. Moreover as the multi piece supports will be produced according to the requirements of the users, the cost of it will be lower than a single piece support mechanism.

### The aim and brief description of the Invention

The aim of the invention is to eliminate the problem of offsetting the center of gravity that could occur if the tractor is loaded excessively in order to ensure that the tractor is balanced by increased or decreasing according to preference, the bag weight support mechanism that is produced with multiple pieces. In addition the aim is to prevent the tractor from toppling over.

The following has been aimed when the bag weight support mechanism subject to the invention is being developed;
- Producing a multi pieced support mechanism instead of a single piece weight support mechanism,
- Obtaining a more ergonomic and more practical product by producing the support mechanism with more than one piece,
- Decreasing production costs by producing the support mechanism with multiple parts in connection with the requirements of tractor users be using less material in comparison to production of a single piece support mechanism,
- A bag weight support mechanism basically is formed of a standard support, right capacity increasing support and a left capacity increasing support. By this means the tractor driver can easily mount or dismount said support mechanism according to requirements. It is therefore aimed to provide an advantage when adding or reducing weight according to the load situation of the tractor.

### Definitions describing the drawings illustrating the invention

The drawings and the related descriptions used in order to better describe a bag weight support mechanism improved with this invention can be found below.
Figure 1: Is the view of the bag support mechanism having an increased capacity with 8 weights.
Figure 2: Is the view of the bag support mechanism having an increased capacity with 6 weights.

### Definitions of the aspects/sections/parts that form the invention.

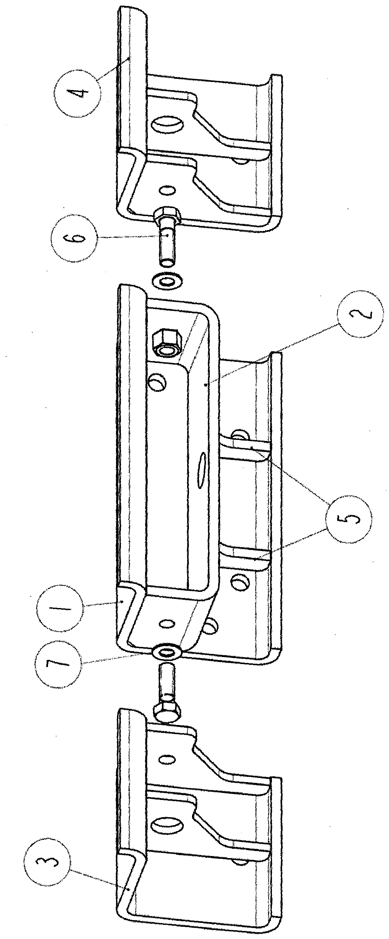

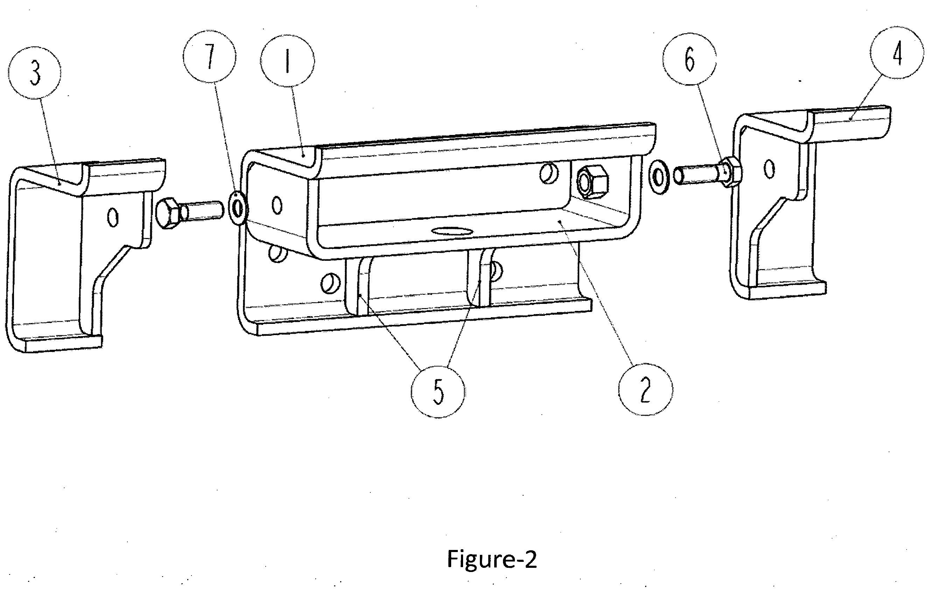

The parts and sections within the figures have been numbered in order to better explain the bag weight support mechanism developed with this invention and the references of said numbers have been listed below.
1. Weight support
2. Weight support U part
3. Capacity increasing right support (different supports for Figure 1 and Figure 2)
4. Capacity increasing left support (different supports for Figure 1 and Figure 2)
5. Tie piece
6. Screw
7. Washer

### Detailed description of the invention

The invention subject to this application is related to various safety elements such as supports and bag type weights in order to maintain the balance of tractors carrying loads during a possible shift of the center of gravity. The invention is related with A weight support mechanism comprising,
- A standard weight support (1)
- Two tie piece (5) support elements within said standard weight support piece
- A weight support U piece (2),
- A right support (3) which increases capacity and
- A left support (4) which increases capacity;
- screw connection element (6)
- a washer (7) tightening element for each screw is provided.

The invention subject to the application aims to eliminate problems of the support mechanisms used nowadays as they are single pieced, and as the support panel cannot be extended when desired or shortened, as a result said support mechanism is not practical and in time is not functional.

In figure 1 and figure 2 bag weight mechanism types carrying 8 weights and 6 weights is described according to the present invention. This mechanism comprises a standard weight support (1), a weight support U piece (2), a capacity increasing right support (3), a capacity increasing left support (4) a tie piece (5), support elements, connection screws (6) and tightening washers (7). The capacity increasing right supports (3) and capacity increasing left supports (4) with 8 weight and 4 weights of the support mechanism are produced in the same way. However their load bearing capacities are different.

The operation of the bag weight mechanism subject to the invention, is carried out by means of a fixed standard weight support (1) attached to the front components of the tractor, having a capacity increasing right (4) support and left support (3) connected with connection screws (6) and tightened with tightening washers (7) in order to prevent the offsetting of the center of gravity of the tractors, in the case that excess loads are loaded on the tractors during their operation in agricultural areas. Thus the support mechanism which is mounted, can be easily mounted or dismantled when excess loads are being loaded or during operation under difficult land conditions.

## Claims

1. A weight support mechanism with multi parts which prevents the offsetting of the center of gravity when tractors used in agricultural activities are subjected to excess loads and difficult land conditions, **characterized in that**; it comprises
• A standard weight support (1)
• Two tie piece (5) support elements within said standard weight support piece
• A weight support U piece (2),
• A right support (3) which increases capacity and
• A left support (4) which increases capacity;
wherein a screw connection element (6) for each of the right support (3) and left supports (4) which increase capacity and a washer (7) tightening element for each screw is provided.

## Patentansprüche

1. Ein Mechanismus von Gewichtsunterstützung mit mehreren Teilen, der die Verrechnung des Schwerpunktes verhindert, wenn Traktoren in die Landwirtschaft verwendet wird sind Überladung und schwierigen Standortbedingungen ausgesetzt, **dadurch gekennzeichnet dass;** es umfasst
• Ein standardmäßige Gewichtsunterstützung (1)
• Zwei Befestigungsstück (5) innerhalb des standardmäßiges Stück von Gewichtsunterstützung
• Ein Stück (2) von Gewichtsunterstützung (U)
• Eine rechte Stütze (3), die die Kapazität erhöht und
• Eine linke Stütze (4), die die Kapazität erhöht;
wobei, ein Verschraubungselement (6) für jeden der richtigen Stütze (3) und die linke Stützen (4), die die Kapazität erhöhen und eine Unterlegscheibe (7) Festziehenelement für jede Schraube vorgesehenen ist.

## Revendications

1. Mécanisme de support de poids à plusieurs parties qui empêche le décalage du centre de gravité lorsque les tracteurs utilisés dans les activités agricoles sont soumis à des charges excessives et à des conditions de terrain difficiles, **caractérisé en ce qu'**il comporte
• Un support de poids standard (1)
• Deux pièce d'accouplement (5) dans ladite pièce de support de poids standard
• Un support de poids U pièce (2),
• Un support droit (3) qui augmente la capacité et
• Un support gauche (4) qui augmente la capacité;
dans lequel un élément de connexion à vis (6) pour chacun des supports droit (3) et gauche (4) qui augmentent la capacité et une rondelle (7) un élément de serrage pour chaque vis est prévu.
